# EUROPÄISCHE PATENTSCHRIFT

(11) **EP 3 016 844 B1**
(45) Veröffentlichungstag und Bekanntmachung des Hinweises auf die Patenterteilung: **25.07.2018**
(21) Anmeldenummer: 14725195.3
(22) Anmeldetag: 21.05.2014
(51) Int. Cl.: B62J 9/00

(54) **SCHLIESSBAUGRUPPE FÜR EINEN GEPÄCKKOFFER**
LOCK ASSEMBLY FOR LUGGAGE CASE
ENSEMBLE SERRURE POUR PORTE-BAGAGES

(30) Priorität: 05.07.2013 DE 102013213217
(43) Veröffentlichungstag der Anmeldung: 11.05.2016
(73) Patentinhaber: Bayerische Motoren Werke Aktiengesellschaft, 80809 München (DE)
(72) Erfinder: REINHART, Peter, 82380 Peissenberg (DE)
(86) Internationale Anmeldenummer: PCT/EP2014/060422
(87) Internationale Veröffentlichungsnummer: WO 2015/000633

(56) Entgegenhaltungen:
- EP-A1- 2 500 246
- WO-A1-2007/131954
- WO-A1-2010/130327
- US-B1- 8 084 701

## Beschreibung

Die Erfindung betrifft eine Schließbaugruppe für einen an einer Halterung befestigbaren Gepäckkoffer gemäß dem Oberbegriff des Anspruchs 1, insbesondere ein Topcase für ein motorisiertes Zweirad.

Als Topcases werden Gepäckkoffer bezeichnet, die auf eine am Zweirad angebrachte Halterung, beispielsweise eine Gepäckbrücke, aufgesetzt und aufrecht stehend arretiert werden.

Gepäckkoffer weisen normalerweise mehrere Schließmechanismen auf. Zum einen ist ein Deckel, der einen Zugang zum Kofferinneren freigeben kann, verschließbar. Zum anderen ist ein Verriegelungsmechanismus vorgesehen, der den Gepäckkoffer an der Halterung fixiert. Schließlich ist normalerweise ein Schloss mit einem Schließzylinder vorgesehen, um den Deckel und oft auch die Befestigung an der Halterung abschließen zu können.

In der WO 2010/130327 A1 ist eine Topcase-Befestigung mit einer Verriegelung des Deckels und einer Verriegelung an einer Halterung des Motorrads gezeigt, bei der die Verriegelung an der Halterung zentral durch eine fahrzeugseitige Verriegelung betätigt wird.

Die gattungsgemäße WO 2007/131954 A1 zeigt eine Schließmechanik, die eine Verriegelung einer Befestigungsmechanik eines Topcases an einer Halterung eines Motorrads sowie gleichzeitig die Verriegelung einer Öffnungsmechanik des Deckels des Topcases ermöglicht, wobei die Schließmechanik im geschlossenen Zustand jeweils die Befestigungsmechanik bzw. die Öffnungsmechanik gegen eine Betätigung blockiert.

Die EP 2 500 246 A1 zeigt eine Schließmechanik mit einer Druckfunktion und einer Drehfunktion, wobei die Druckfunktion eine Verriegelung eines Topcases an einer Halterung des Motorrads lösen kann und durch Drehen eines Schlüssels im Schloss die Verriegelung des Deckels des Topcases aufgehoben Die EP 2 500 246 A1 ist der nächste Stand der Technik und offenbart die folgenden Merkmale des Anspruchs 1; eine Schließbaugruppe eines an einer Halterung befestigbaren Gepäckkoffers, insbesondere ein Topcase für ein motorisiertes Zweirad, mit wenigstens einer Grundplatte und einer an der Grundplatte befestigten Schlossmechanik, die wenigstens eine erste und eine zweite verstellbare Riegelstruktur umfasst, wobei eine der Riegelstrukturen mit einem Deckel des Gepäckkoffers und die andere der Riegelstrukturen mit einer Befestigung des Gepäckkoffers an der Halterung koppelbar ist, wobei das Ver- und Entriegeln der ersten Riegelstruktur durch eine Druckfunktion und das Ver- und Entriegeln der zweiten Riegelstruktur durch eine Drehfunktion der Schlossmechanik erfolgt, wobei die Schlossmechanik ein drehbar angeordnetes Stellelement mit einer Außenfläche aufweist, die mit der ersten und der zweiten Riegelstruktur zusammenwirkt, wobei die Außenfläche des Stellelements eine Fläche aufweist, die bei Betätigung der Druckfunktion linear verschoben wird und die mit einer Fläche an der ersten Riegelstruktur (241) zusammenwirkt, um die erste Riegelstruktur (241) linear zu verschieben, und das Stellelement einen Vorsprung aufweist, der bei einer Verdrehung des Stellelements mit der zweiten Riegelstruktur zusammenwirkt und diese dreht. Aufgabe der Erfindung ist es, eine allgemein einsetzbare Schließbaugruppe vorzuschlagen, die nach Möglichkeit sämtliche Verriegelungs- und Schließfunktionen eines Gepäckkoffers auf geringem Bauraum umfasst.

Dies wird durch eine Schließbaugruppe für einen an einer Halterung befestigbaren Gepäckkoffer erreicht, die die Merkmale des Anspruchs 1 aufweist. Das Ver- und Entriegeln der ersten Riegelstruktur erfolgt durch eine Druckfunktion, und das Ver- und Entriegeln der zweiten Riegelstruktur erfolgt durch eine Drehfunktion der Schlossmechanik. Aufgrund der verschiedenen Arten der Betätigung, nämlich einer Rotationsbewegung sowie einer Linearverschiebung, können verschiedene Riegelstrukturen auf engem Raum angeordnet und dennoch unabhängig voneinander bewegt werden. Die Koppelung mit dem Deckel des Gepäckkoffers und mit der Befestigung des Gepäckkoffers an der Halterung gibt die Möglichkeit, auf einfache Weise sowohl eine komplette Sperrung (z.B. ein abgeschlossener Zustand, der nur mittels eines Schlüssels veränderbar ist) als auch temporär verschlossene Zustände zu realisieren, die durch Bewegung von vom Schlüssel unabhängigen Bedienelementen zu lösen sind. Die gesamte Schließbaugruppe kann also sämtliche benötigten Schließfunktionen ausführen und dabei kompakt gestaltet und universell einsetzbar sein.

Die Schlossmechanik weist ein drehbar angeordnetes Stellelement mit einer Außenfläche auf, die mit der ersten und der zweiten Riegelstruktur zusammenwirkt. Das Stellelement ist dabei vorzugsweise um die Achse des Schließzylinders drehbar und wird insbesondere durch Drehen des Schlüssels im Schließzylinder in verschiedene Winkelpositionen gedreht.

Die Erfindung eignet sich insbesondere für ein Topcase für ein motorisiertes Zweirad, sie ist aber auch für z.B. seitlich befestigte Gepäckkoffer umsetzbar.

In diesem Zusammenhang wird unter einer "Drehfunktion" eine Betätigung durch Drehen eines Bauteils, also durch eine Rotationsbewegung, verstanden, während eine "Druckfunktion" eine Betätigung durch Eindrücken oder Herausziehen eines Bauteils, also durch eine lineare Bewegung, bezeichnet.

Die Schlossmechanik kann bereits den Schließzylinder mit umfassen. Dieser kann aber auch separat in die Schlossmechanik eingesetzt werden, sodass individuelle, vorgefertigte Schließzylinder beispielsweise für Gepäckkoffer unterschiedlicher Fabrikate verwendet werden können. Die durch den Schlüssel im Schließzylinder übertragene Bewegung ist jedoch vorzugsweise stets eine Drehbewegung.

Beide Riegelstrukturen sind vorteilhaft durch Federn in ihre verriegelte Position vorgespannt, da meistens gewünscht ist, dass der Gepäckkoffer nicht mit einem offenen Deckel oder unverriegelt an der Halterung verbleibt.

Die Schließbaugruppe umfasst vorzugsweise wenigstens drei Bedienelemente, insbesondere einen Tragegriff zum Abheben des Gepäckkoffers von der Gepäckbrücke, einen Deckelgriff zum Öffnen eines Deckels des Gepäckkoffers sowie einen Druckknopf zum Entriegeln einer der beiden Riegelstrukturen.

In einer bevorzugten Ausführungsform blockiert die erste Riegelstruktur im verriegelten Zustand den Deckelgriff, und zwar vorteilhaft das Anheben des Deckelgriffs. So bleibt eine mit dem Deckelgriff verbundene Deckel-Riegelstruktur, die den Deckel geschlossen hält, solange der Deckelgriff nicht angehoben ist, zuverlässig verriegelt. Erst wenn die erste Riegelstruktur den Deckelgriff freigibt, kann dieser angehoben werden, wodurch die Deckel-Riegelstruktur entriegelt wird und ein Öffnen des Deckels des Gepäckkoffers ermöglicht.

Die zweite Riegelstruktur blockiert nach einer vorteilhaften Ausführungsform den Tragegriff. Auch hier wird vorzugsweise das Anheben des Tragegriffs blockiert, insbesondere wenn der Tragegriff mit einer Tragegriff-Riegelmechanik verbunden ist, die das Verriegeln an und Lösen von der Halterung bewirkt. Durch das Blockieren des Tragegriffs kann dann zuverlässig verhindert werden, dass der Gepäckkoffer von der Halterung gelöst wird.

Selbstverständlich ist auch eine Ausführung möglich, in der die Koppelung der beiden Riegelstrukturen vertauscht ist, sodass die erste Riegelstruktur mit dem Tragegriff und die zweite Riegelstruktur mit dem Deckelgriff verbunden ist.

In einer möglichen Ausführung sind die Riegelstrukturen plattenförmig ausgebildet und weisen abstehende Riegelhaken auf, die im verriegelten Zustand in korrespondierende Riegelhaken am Tragegriff und am Deckelgriff eingreifen und so die Bewegung von Tragegriff bzw. Deckelgriff blockieren.

Die Schlossmechanik weist vorzugsweise eine Nullstellung auf, die einem komplett abgeschlossenen Zustand entspricht, und in der die erste Riegelstruktur von der Druckfunktion entkoppelt ist. So kann auf einfache Weise sichergestellt werden, dass auch eine gewaltsame Betätigung der Druckfunktion etwa durch Eindrücken des Schließzylinders nicht zu einem Entriegeln der ersten Riegelstruktur führt.

Das Stellelement kann eine Ausnehmung aufweisen, die in der Nullstellung gegenüber der ersten Riegelstruktur angeordnet ist, sodass kein Kontakt zwischen dem Stellelement und der Riegelstruktur besteht. Auf diese Weise lässt sich die Entkoppelung der ersten Riegelstruktur von der Druckfunktion einfach erreichen. Wird in der Nullstellung das Stellelement linear verschoben, so wirkt keine Kraft auf die erste Riegelstruktur, da sich diese vorzugsweise über den gesamten Verschiebeweg in der Ausnehmung befindet und somit nicht in Kontakt mit dem Stellelement kommt.

Die Außenfläche des Stellelements weist eine geneigte Rampenfläche auf, die bei Betätigung der Druckfunktion linear verschoben wird und die mit einer Rampenfläche an der ersten Riegelstruktur zusammenwirkt, um die Riegelstruktur linear zu verschieben. Die Rampenfläche wird vorzugsweise beim Aufschließen des Schließzylinders aus der Nullstellung unter die erste Riegelstruktur gedreht, um einen Kontakt zwischen dem Stellelement und der ersten Riegelstruktur herzustellen.

Das Stellelement weist einen Vorsprung auf, der bei einer Verdrehung des Stellelements mit der zweiten Riegelstruktur zusammenwirkt und diese linear verschiebt. Hierüber lässt sich auf einfache Weise die Drehfunktion realisieren. Bei Verdrehen des Stellelements, beispielsweise durch Weiterdrehen des Schlüssels im Schließzylinder in Schließrichtung aus der Nullstellung heraus, wird der Vorsprung in Eingriff mit der zweiten Riegelstruktur gebracht, hebt diese an und entriegelt so den Tragegriff.

Die Schlossmechanik umfasst vorzugsweise eine Feder, die ein Rückstellen der Druckfunktion und ein Rückstellen der Drehfunktion bewirkt. Hierfür eignet sich beispielsweise eine Spiralfeder, die das Stellelement umgeben kann. Eine axiale Kompression der Spiralfeder erzeugt eine Rückstellkraft für die Druckfunktion, die das Stellelement linear bewegt. Die Rückstellkraft für die Drehfunktion lässt sich einfach verwirklichen, indem ein Ende der Feder am Stellelement befestigt ist, während das andere Ende der Spiralfeder an der Grundplatte befestigt ist oder bei der Verdrehung in Kontakt mit der Grundplatte kommt. So wird eine Rückstellkraft in Umfangsrichtung erzeugt.

Um die Schließbaugruppe kompakt zu gestalten, kann die zweite Riegelstruktur an der ersten Riegelstruktur geführt sein und insbesondere gegen die erste Riegelstruktur vorgespannt sein. Auf diese Weise ist nur eine Befestigung und/oder Führung einer der Riegelstrukturen an der Grundplatte erforderlich, was Bauraum einspart.

Die Erfindung wird nachfolgend anhand einer Ausführungsform mit Bezug auf die beigefügten Zeichnungen näher beschrieben. In den Zeichnungen zeigen:
- Figur 1 eine schematische perspektivische Ansicht der Außenseite einer erfindungsgemäßen Schließbaugruppe;
- Figur 2 eine schematische perspektivische Ansicht einer Schlossmechanik der erfindungsgemäßen Schließbaugruppe;
- Figur 3 die Schließbaugruppe aus Figur 1 von der Innenseite;
- Figur 4 die Schließbaugruppe aus Figur 1 von der Außenseite; und
- Figur 5 eine schematische Schnittansicht einer erfindungsgemäßen Schließbaugruppe.

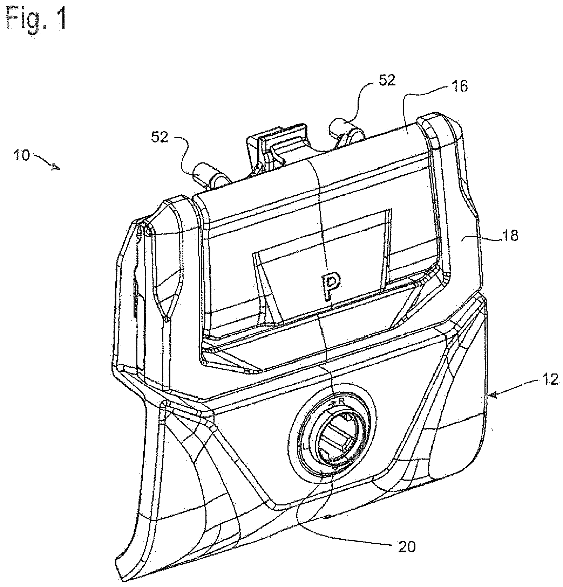

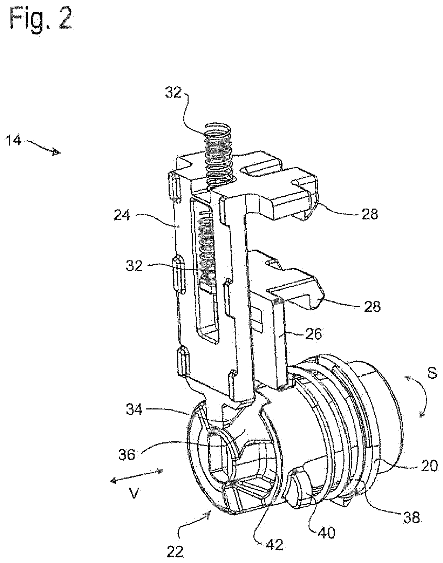

Figur 1 zeigt eine Schließbaugruppe 10, die im Wesentlichen aus einer Grundplatte 12, einer an der Grundplatte 12 montierten Schlossmechanik 14 (siehe Figur 2) sowie hier drei Bedienelementen 16, 18, 20 besteht.

Das erste Bedienelement 16 ist hier ein Deckelgriff, der mit einem Deckel eines nicht weiter dargestellten Gepäckkoffers gekoppelt ist.

Das zweite Bedienelement 18 ist hier ein Tragegriff, der mit einer nicht weiter dargestellten Tragegriff-Mechanik zur Befestigung des Gepäckkoffers an einer Halterung, beispielsweise einer Gepäckbrücke eines motorisierten Zweirads gekoppelt ist.

Das dritte Bedienelement 20 ist ein Druckknopf. Dieser ist durch einen nicht dargestellten Schließzylinder der Schlossmechanik 14 umgebendes Ringelement gebildet, das mit einem weiter unten beschriebenen Stellelement 22 (siehe Figur 2) verbunden ist und das in die Grundplatte 12 hineingedrückt werden kann. Das Bedienelement 20 und das Stellelement 22 bilden in diesem Beispiel eine fest verbundene Einheit.

Die Schlossmechanik 14 umfasst eine erste Riegelstruktur 24 sowie eine zweite Riegelstruktur 26, die im vorliegenden Fall beide jeweils durch einen plattenförmigen Körper mit davon abstehenden Riegelhaken 28 ausgebildet sind.

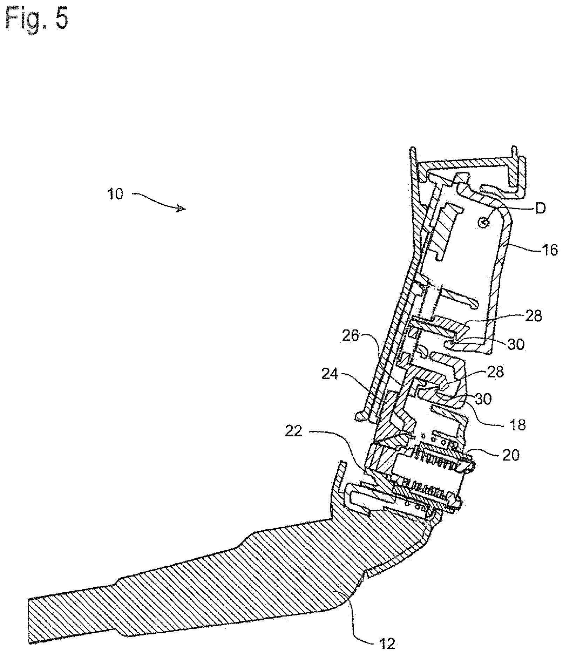

Die plattenförmigen Körper der ersten und der zweiten Riegelstruktur 24, 26 sind hier, wie in den Figuren 2 und 5 dargestellt, parallel zueinander hintereinanderliegend positioniert.

Die Riegelhaken 28 greifen im verriegelten Zustand der jeweiligen Riegelstruktur 24, 26 in korrespondierende Riegelhaken 30 an den Bedienelementen 16, 18, also dem Deckelgriff bzw. dem Tragegriff, ein. Auf diese Weise ist im verriegelten Zustand das Anheben des jeweiligen Griffs blockiert.

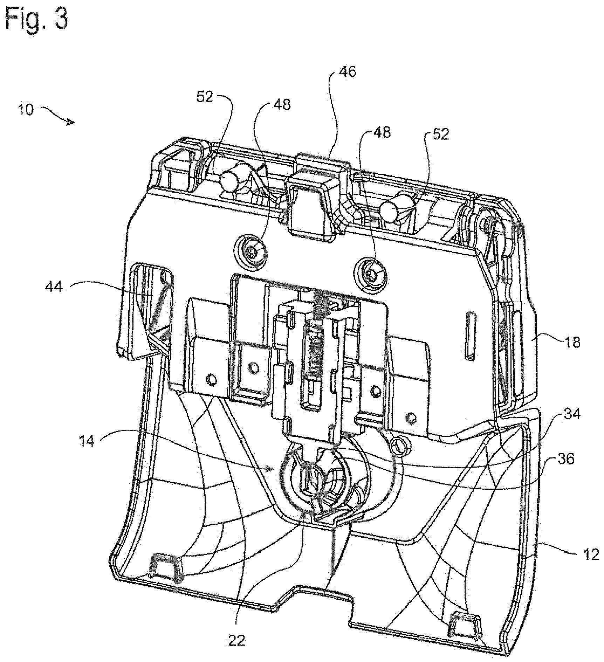

Die Schlossmechanik 14 ist so in die Grundplatte 12 eingesetzt, dass die erste Riegelstruktur 24 an der Grundplatte linear verschieblich geführt ist, wie in Figur 3 angedeutet ist.

Die zweite Riegelstruktur 26 ist hier an der ersten Riegelstruktur 24 geführt, wobei auf eine Verbindung mit der Grundplatte 12 verzichtet werden kann.

Über Federn 32 sind sowohl die erste als auch die zweite Riegelstruktur 24, 26 in ihre verriegelte Stellung (in den Figuren nach unten) vorgespannt. Die mit der ersten Riegelstruktur 24 verbundene Feder 32 stützt sich hier an der Grundplatte 12 ab, während die die zweite Riegelstruktur 26 vorspannende Feder 32 in einer Ausnehmung der ersten Riegelstruktur 24 angeordnet ist und sich an dieser abstützt.

Das in den Figuren untere Ende der ersten Riegelstruktur 24 weist eine geneigte Rampenfläche 34 auf, die mit einer gleichgerichteten Rampenfläche 36 an der Außenfläche des Stellelements 22 zusammenwirkt.

Wird das dritte Bedienelement 20 in die Grundplatte 12 hineingedrückt, so verschiebt sich die Rampenfläche 36 des Stellelements 22 (siehe Pfeil V in Figur 2) und hebt dabei die erste Riegelstruktur 24 an. Hierdurch kommen die Riegelhaken 28 außer Eingriff mit den Riegelhaken 30 am Deckelgriff, sodass der Deckel jetzt angehoben werden kann.

Das Eindrücken des Bedienelements 20 und das damit verbundene Entriegeln der ersten Riegelstruktur 24 wird hier auch als Druckfunktion bezeichnet.

Eine das Stellelement 22 und das Bedienelement 20 konzentrisch umgebende Spiralfeder 38 erzeugt eine Rückstellkraft in die Ausgangsposition.

Das Bedienelement 20 und das Stellelement 22 weisen eine Aufnahme auf, in der ein (hier nicht dargestellter) Schließzylinder verankert wird. Indem ein passender Schlüssel in den Schließzylinder eingesteckt und gedreht wird, lässt sich das Stellelement 22 insgesamt verdrehen (siehe Pfeil S in Figur 2).

Die Schlossmechanik 14 ist in den Figuren in einer Stellung dargestellt, in der die erste Riegelstruktur 24 verriegelt ist, aber durch Eindrücken des dritten Bedienelements 20 entriegelt werden kann.

Die zweite Riegelstruktur 26 bleibt auch beim Betätigen der Druckfunktion verriegelt und wird nur durch Drehen des Stellelements 22 entriegelt. Das Entriegeln der zweiten Riegelstruktur 26 durch Verdrehen des Stellelements 22 wird hier auch als Drehfunktion bezeichnet.

Zur Entriegelung der zweiten Riegelstruktur 26 ist an der äußeren Umfangsfläche des Stellelements 22 ein Vorsprung 40 ausgebildet, der in Radialrichtung nach außen absteht und der eine mit einer Außenfläche der zweiten Riegelstruktur 26 zusammenwirkende Rampenfläche aufweist. Wird das Stellelement 22 in Figur 2 nach rechts gedreht, so kommt der Vorsprung 40 in Kontakt mit der zweiten Riegelstruktur 26 und hebt diese gegen die Kraft der Feder 32 an. Das Anheben der zweiten Riegelstruktur 26 hat zur Folge, dass die Riegelhaken 28 außer Eingriff mit den Riegelhaken 30 am Tragegriff gelangen, sodass der Tragegriff jetzt angehoben werden kann.

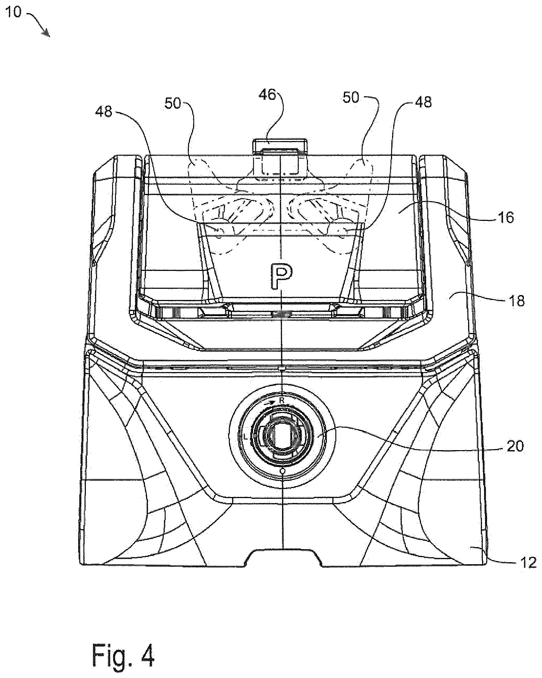

Das Stellelement 22 weist außerdem auf seiner Außenfläche eine Ausnehmung 42 auf, die in Umfangsrichtung zwischen dem Vorsprung 40 und der Rampenfläche 36 angeordnet ist, wobei sich die Ausnehmung 42 in Axialrichtung mit dem Vorsprung 40 teilweise überschneidet. Wenn sich die Schlossmechanik 14 in ihrer abgeschlossenen Stellung befindet, so liegt die Ausnehmung 42 direkt unter der Rampenfläche 36 der ersten Riegelstruktur 24. Dies entspricht in den Figuren einer Stellung, in der der Schlüssel im Schließzylinder quer steht und auf das "L" in den Figuren 1 und 4 zeigt. Bei einem Eindrücken des dritten Bedienelements 20 in dieser Stellung kommt das Stellelement 22 nicht in Kontakt mit der ersten Riegelstruktur 24, da das Stellelement 22 und die erste Riegelstruktur 24 vollständig entkoppelt sind.

Erst, wenn der Schlüssel in die senkrechte Position in den Figuren gedreht wird, die einem geöffneten Zustand entspricht (entsprechend der Markierung "O" in den Figuren), liegt, wie in Figur 2 dargestellt, die Rampenfläche 36 unter der Rampenfläche 34 und der Deckelgriff kann entriegelt werden.

Wird der Schlüssel und damit das Stellelement 22 aus der geöffneten Stellung weiter in den Figuren nach rechts gedreht (angedeutet in Figur 1 und 4 mit der Markierung "R"), so wird der Vorsprung 40 in Kontakt mit der zweiten Riegelstruktur 26 gebracht. Hierbei liegt nach wie vor die Rampenfläche 34 der ersten Riegelstruktur 24 im Bereich der Ausnehmung 42.

Die Feder 38 kommt bei der Verdrehung des Stellelements 22 durch den Schlüssel im Schließzylinder beispielsweise in Kontakt mit der Grundplatte 12 (nicht dargestellt), sodass sich eine Vorspannung entgegen der Drehrichtung aufbauen kann, die eine Rückstellkraft erzeugt.

Die Schlossmechanik 14 ist durch eine aus Gründen der besseren Sichtbarkeit in Figur 3 weggelassene Abdeckplatte verdeckt, die an der Grundplatte 12 verschraubt ist.

Die Schließbaugruppe 10 lässt sich in einen beliebigen Gepäckkoffer, insbesondere ein Topcase, einbauen, der eine Mechanik zur Befestigung an einer Halterung sowie eine Mechanik zum Verschließen seines Deckels aufweist.

Der Tragegriff, also das zweite Bedienelement 18, wird dann so mit der Mechanik zur Befestigung an der Halterung verbunden, beispielsweise durch eine Koppelstange, dass ein Anheben des Tragegriffs ein Lösen der Tragegriff-Mechanik von der Halterung zur Folge hat. Eine derartige Koppelstange lässt sich beispielsweise durch eine Ausnehmung 44 an der Rückseite der Schließbaugruppe 10 führen.

In diesem Beispiel weist die Schließbaugruppe 10 auch eine Mechanik zum Öffnen des Deckels des Gepäckkoffers auf. Diese ist in den Figuren 3 und 4 angedeutet.

Am ersten Bedienelement 16, dem Deckelgriff, ist ein Vorsprung 46 angeformt, hier in der Mitte des in den Figuren oberen Endes des Deckelgriffs, der bei Anheben des Deckelgriffs um dessen Drehachse D verschwenkt wird. Diese Schwenkbewegung wird auf zwei jeweils seitlich vom Vorsprung 46 angeordnete, verschwenkbar über exzentrisch angeordnete Schwenkpunkte 48 an der Grundplatte 12 befestigte Schwenkelemente 50 übertragen. Jedes der Schwenkelemente 50 weist einen Zapfen 52 auf, der bewegt wird, wenn das Schwenkelement 50 verschwenkt wird. Die Bewegung erfolgt in diesem Beispiel so, dass die beiden Zapfen 52 aufeinander zu verschwenkt werden. Die Zapfen 52 können mit einer Verschlussmechanik des Deckels (nicht dargestellt) gekoppelt sein und beispielsweise Blockierstifte einer Deckel-Riegelstruktur zurückziehen.

Andere Arten der Kopplung zwischen den Bedienelementen und insbesondere dem Deckel und der Halterung sind natürlich auch denkbar.

## Patentansprüche

1. Schließbaugruppe eines an einer Halterung befestigbaren Gepäckkoffers, insbesondere eines Topcase für ein motorisiertes Zweirad, mit wenigstens einer Grundplatte (12) und einer an der Grundplatte (12) befestigten Schlossmechanik (14), die wenigstens eine erste und eine zweite verstellbare Riegelstruktur (24, 26) umfasst, wobei eine der Riegelstrukturen (24) mit einem Deckel des Gepäckkoffers und die andere der Riegelstrukturen (26) mit einer Befestigung des Gepäckkoffers an der Halterung koppelbar ist, wobei das Ver- und Entriegeln der ersten Riegelstruktur (24) durch eine Druckfunktion und das Ver- und Entriegeln der zweiten Riegelstruktur (26) durch eine Drehfunktion der Schlossmechanik (14) erfolgt, wobei die Schlossmechanik (14) ein drehbar angeordnetes Stellelement (22) mit einer Außenfläche aufweist, die mit der ersten und der zweiten Riegelstruktur (24. 26) zusammenwirkt, wobei die Außenfläche des Stellelements (22) eine geneigte Rampenfläche (36) aufweist, die bei Betätigung der Druckfunktion linear verschoben wird und die mit einer Rampenfläche (34) an der ersten Riegelstruktur (24) zusammenwirkt, um die erste Riegelstruktur (24) linear zu verschieben, und das Stellelement (22) einen Vorsprung (40) aufweist, der bei einer Verdrehung des Stellelements (22) mit der zweiten Riegelstruktur (26) zusammenwirkt und diese linear verschiebt.

2. Schließbaugruppe nach Anspruch 1, **dadurch gekennzeichnet, dass** sie wenigstens drei Bedienelemente (16, 18, 20) umfasst, insbesondere einen Deckelgriff zum Öffnen eines Deckels des Gepäckkoffers, einen Tragegriff zum Abheben des Gepäckkoffers von der Gepäckbrücke und einen Druckknopf zum Entriegeln einer der beiden Riegelstrukturen (24. 26).

3. Schließbaugruppe nach einem der vorhergehenden Ansprüche, **dadurch gekennzeichnet, dass** die erste Riegelstruktur (24) im verriegelten Zustand ein erstes Bedienelement (16), insbesondere einen Deckelgriff, blockiert.

4. Schließbaugruppe nach einem der vorhergehenden Ansprüche, **dadurch gekennzeichnet, dass** die zweite Riegelstruktur (26) im verriegelten Zustand ein zweites Bedienelement (18), insbesondere einen Tragegriff, blockiert.

5. Schließbaugruppe nach einem der vorhergehenden Ansprüche, **dadurch gekennzeichnet, dass** die Schlossmechanik (14) eine Nullstellung aufweist, die einem komplett abgeschlossenen Zustand entspricht, in der die erste Riegelstruktur (24) von der Druckfunktion entkoppelt ist.

6. Schließbaugruppe nach Anspruch 5, **dadurch gekennzeichnet, dass** das Stellelement (22) eine Ausnehmung (42) aufweist, die in der Nullstellung gegenüber der ersten Riegelstruktur (24) angeordnet ist, sodass kein Kontakt zwischen dem Stellelement (22) und der Riegelstruktur (24) besteht.

7. Schließbaugruppe nach einem der vorhergehenden Ansprüche, **dadurch gekennzeichnet, dass** die Schlossmechanik (14) eine Feder (38) umfasst, die ein Rückstellen der Druckfunktion und ein Rückstellen der Drehfunktion bewirkt.

8. Schließbaugruppe nach einem der vorhergehenden Ansprüche, **dadurch gekennzeichnet, dass** die zweite Riegelstruktur (26) an der ersten Riegelstruktur (24) geführt ist und insbesondere gegen die erste Riegelstruktur (24) vorgespannt ist.

## Claims

1. A closing assembly of a luggage case which can be fastened to a holding device, especially of a top case for a motorised two-wheeled vehicle, with at least one baseplate (12) and a lock mechanism (14) fastened to the baseplate (12), which mechanism comprises at least a first and a second adjustable bolt structure (24, 26), wherein one of the bolt structures (24) can be coupled with a lid of the luggage case and the other one of the bolt structures (26) can be coupled with a device for fastening the luggage case to the holding device, wherein the locking and unlocking of the first bolt structure (24) takes place by a push function and the locking and unlocking of the second bolt structure (26) takes place by a rotary function of the lock mechanism (14), wherein the lock mechanism (14) has a rotatably arranged actuating element (22) with an outer face which cooperates with the first and the second bolt structure (24, 26), wherein the outer face of the actuating element (22) has an inclined ramp face (36) which upon actuation of the push function is displaced linearly and which cooperates with a ramp face (34) on the first bolt structure (24) in order to displace the first bolt structure (24) linearly, and the actuating element (22) has a projection (40) which upon turning of the actuating element (22) cooperates with the second bolt structure (26) and displaces it linearly.

2. A closing assembly according to Claim 1, **characterised in that** it comprises at least three operating elements (16, 18, 20), especially a lid handle for opening a lid of the luggage case, a carrying handle for lifting the luggage case off from the luggage rack and a pushbutton for unbolting one of the two bolt structures (24, 26).

3. A closing assembly according to one of the preceding claims, **characterised in that** the first bolt structure (24) in the bolted state blocks a first operating element (16), especially a lid handle.

4. A closing assembly according to one of the preceding claims, **characterised in that** the second bolt structure (26) in the bolted state blocks a second operating element (18), especially a carrying handle.

5. A closing assembly according to one of the preceding claims, **characterised in that** the lock mechanism (14) has a zero position which corresponds to a completely closed-off state, in which the first bolt structure (24) is uncoupled from the push function.

6. A closing assembly according to Claim 5, **characterised in that** the actuating element (22) has a cutout (42) which in the zero position is arranged opposite the first bolt structure (24), so that there is no contact between the actuating element (22) and the bolt structure (24).

7. A closing assembly according to one of the preceding claims, **characterised in that** the lock mechanism (14) comprises a spring (38) which causes the push function and the rotary function to be reset.

8. A closing assembly according to one of the preceding claims, **characterised in that** the second bolt structure (26) is guided on the first bolt structure (24) and especially is pre-stressed against the first bolt structure (24).

## Revendications

1. Ensemble de fermeture d'un coffre à bagages pouvant être fixées sur un support de retenue, en particulier un boîtier supérieur d'un deux roues motorisé, comprenant au moins une plaque de base (12) et un mécanisme de serrure (14) fixé à la plaque de base (12) qui comporte au moins une première structure de verrouillage réglable et une seconde structure de verrouillage réglable (24, 26), l'une des structures de verrouillage (24) pouvant être couplée avec le couvercle du coffre à bagages et l'autre structure de verrouillage (26) pouvant être couplée à une fixation du coffre à bagages sur le support de retenue, le verrouillage et le déverrouillage de la première structure de verrouillage (24) s'effectuant par une fonction de pression et le verrouillage et le déverrouillage de la seconde structure de verrouillage (26) s'effectuant par une fonction de rotation du mécanisme de serrure (14), le mécanisme de serrure (14) comportant un élément de réglage (22) monté mobile en rotation ayant une surface externe qui coopère avec la première structure de verrouillage et avec la seconde structure de verrouillage (24, 26), la surface externe de l'élément de réglage (22) comportant une surface en forme de rampe inclinée (36) qui est déplacée linéairement lors de l'actionnement de la fonction de pression, et, qui coopère avec une surface en forme de rampe (34) située sur la première structure de verrouillage (24) pour la déplacer linéairement, et l'élément de réglage (22) comporte une saillie (40) qui, lors d'une rotation de l'élément de réglage (22), coopère avec la seconde structure de verrouillage (26) et la déplace linéairement.

2. Ensemble de fermeture conforme à la revendication 1,
**caractérisé en ce qu'**
il comporte au moins trois éléments de manoeuvre (16, 18, 20), en particulier une poignée de couvercle permettant d'ouvrir un couvercle du coffre à bagages, une poignée de transport permettant de soulever le coffre à bagages du pont de bagages, et un bouton poussoir permettant de déverrouiller l'une des deux structures de verrouillage (24, 26).

3. Ensemble de fermeture conforme à l'une des revendications précédentes,
**caractérisé en ce qu'**
à l'état verrouillé, la première structure de verrouillage (24) bloque un premier élément de manoeuvre (16), en particulier, une poignée de couvercle.

4. Ensemble de fermeture conforme à l'une des revendications précédentes,
**caractérisé en ce qu'**
à l'état verrouillé, la seconde structure de verrouillage (26) bloque un second élément de manoeuvre (18), en particulier une poignée de transport.

5. Ensemble de fermeture conforme à l'une des revendications précédentes,
**caractérisé en ce que**
le mécanisme de serrure (14) a une position zéro qui correspond à un état complètement fermé dans lequel la première structure de verrouillage (24) est découplée de la fonction de pression.

6. Ensemble de fermeture conforme à la revendication 5,
**caractérisé en ce que**
l'élément de réglage (22) comporte un évidement (42) qui, dans la position zéro est situé en regard de la première structure de verrouillage (24) de sorte qu'il n'y ait aucun contact entre l'élément de réglage (22) et la structure de verrouillage (24).

7. Ensemble de fermeture conforme à l'une des revendications précédentes,
**caractérisé en ce que**
le mécanisme de serrure (14) comporte un ressort (38) qui permet une réinitialisation de la fonction de pression et une réinitialisation de la fonction de rotation.

8. Ensemble de fermeture conforme à l'une des revendications précédentes,
**caractérisé en ce que**
la seconde structure de verrouillage (26) est guidée sur la première structure de verrouillage (24) et est, en particulier, précontrainte contre la première structure de verrouillage (24).
